(19) Europäisches Patentamt
European Patent Office
Office européen des brevets

(11) Veröffentlichungsnummer: **0 458 061 B1**

# (12) EUROPÄISCHE PATENTSCHRIFT

(45) Veröffentlichungstag der Patentschrift: **11.10.95**

(51) Int. Cl.[6]: **B27K 3/50**

(21) Anmeldenummer: **91106096.0**

(22) Anmeldetag: **17.04.91**

## (54) Mittel zum Konservieren von Holz und Holzwerkstoffen.

(30) Priorität: **23.05.90 DE 4016601**

(43) Veröffentlichungstag der Anmeldung:
**27.11.91 Patentblatt 91/48**

(45) Bekanntmachung des Hinweises auf die Patenterteilung:
**11.10.95 Patentblatt 95/41**

(84) Benannte Vertragsstaaten:
**AT BE CH DE DK ES FR GB GR IT LI LU NL SE**

(56) Entgegenhaltungen:
**EP-A- 0 040 106**
**EP-A- 0 148 526**
**EP-A- 0 328 466**

**CHEMICAL ABSTRACTS, Band 109, Nr. 20, 14. November 1988, Seite 91, Zusammenfassung Nr. 17200a, Columbus, Ohio, US; & HU-A-44 279 (KEMIKAL EPITOANYAGIPARI VALLALAT) 29-02-1988**

(73) Patentinhaber: **DESOWAG GmbH**
**Rossstrasse 76**
**D-40476 Düsseldorf (DE)**

(72) Erfinder: **Goletz, Peter**
**Weserweg 90**
**W-4150 Krefeld 1 (DE)**
Erfinder: **Naczinski, Luzian**
**Nierster Strasse 18**
**W-4005 Meerkamp-Lank (DE)**

(74) Vertreter: **Sparing - Röhl - Henseler Patentanwälte**
**Postfach 14 04 43**
**D-40074 Düsseldorf (DE)**

EP 0 458 061 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein wässriges Mittel zum Konservieren von Holz und Holzwerkstoffen auf der Basis von Fungiziden und gegebenenfalls mindestens einem Insektizid, und einem Gemisch aus Wasser und einem organisch-chemischen Bindemittel oder Fixierungsmittel sowie ggf. einem organischen Verdünnungsmittel und/oder einem Emulgator.

Ein derartiges Konservierungsmittel ist aus der DE-OS 3004319 bekannt. Als Insektizide werden Carbamate, Phosphorsäureester, Thiophosphorsäurester, Thionophosphorsäureester, chlorierte Kohlenwasserstoffe und Pyrethroide, als Fungizide tetravalente zinnorganische Verbindungen, chlorierte Phenole, Triazole, N-Cyclohexyl-diazeniumdioxy-aluminium sowie N,N-Dimethyl-N'-phenyl-N'-(fluordichlormethylthio)-sulfamid genannt. Eine Angabe über die Art der Wirksamkeit der Biozidkombinationen wird jedoch nicht gemacht.

Demgegenüber besteht die Aufgabe der vorliegenden Erfindung darin, ein Mittel zum Konservieren von Holz und Holzwerkstoffen zur Verfügung zu stellen, das durch eine Auswahl ganz bestimmter Fungizide und gegebenenfalls Insektizide sowohl eine gute Wirksamkeit gegenüber holzverfärbende Pilze und/oder holzzerstörenden Insekten als auch eine gute Stabilisierung der Wirkstoffe in wäßrigen Formulierungen aufweist. Darüberhinaus sollte nicht nur ein gutes Eindringen der Wirkstoffe in das Holz, sondern gleichzeitig auch eine gleichmäßige Wirkstoffverteilung im Holz selbst gewährleistet sein.

Zur Lösung der Aufgabe ist das eingangs beschriebene Mittel zum Konservieren von Holz und Holzwerkstoffen nach der Erfindung dadurch gekennzeichnet, daß es 0,1 bis 2,0 Gew. %, vorzugsweise 0,8 bis 1,5 Gew. %, α-[[2-(4-Chlorphenyl)ethyl]-α-(1,1-dimethylethyl)-1H-1-,2,4-triazol-1-ethanol, (common name: Tebuconazol), 0,2 bis 2,3 Gew. %, vorzugsweise 0,3 bis 1,2 Gew. %, eines fungiziden Carbamats, nämlich 3 -Jod-2-propinylbutylcarbamat oder Methyl-benzimidazol-2yl-carbamat, 1,0 bis 5,0 Gew.-%, vorzugsweise 2,0 bis 3,0 Gew.-%, 2,2,4-Trimethyl-1,3-pentadiol-monoisobutyrat und mehr als 89 Gew.-%, vorzugsweise mehr als 96 Gew.-%, eines Gemisches, bestehend aus Wasser und mindestens einem Bindemittel und/oder Fixierungsmittel und gegebenenfalls mindestens einem organischen Verdünnungsmittel sowie ggf. mindestens einem Emulgator und/oder Netzmittel, enthält.

Nach einer vorteilhaften Ausführungsform enthält das erfindungsgemäße Holzkonservierungmsittel zusätzlich 0,002 bis 0,8 Gew.-%, vorzugsweise 0,03 bis 0,2 Gew.-%, Cyano-(4-fluoro-3-phenoxyphenyl)-methyl-3-(2,2-dichlorethenyl)-2,2-dimethylcyclopropancarboxylat(common name: Cyfluthrin), (±)α-Cyano-3-phenoxy-benzyl-(±)-cis, trans-3-(2,2-dichlorvinyl)-2,2-dimethylcyclopropan-carboxylat, (S)-α-Cyano-3-phenoxybenzyl(1R,3R)-3-(2,2-dibromvinyl)-2,2-dimethylcyclopropancarboxylat oder 3-Phenoxybenzyl-(±)-cis-trans-3-(2,2-dichlorvinyl)2,2 -dimethylcyclopropancarboxylat, ( S)-α-Cyano-3-phenoxybenzyl (1R,3R)-3(2,2-dibromvinyl)-2,2-dimethylcyclopropancarboxylat oder 3-Phenoxybenzyl-(±)-cis-trans-3-(2,2-dichlorvinyl)2,2 -dimethylcyclopropancarboxylat (common name: Permethrin) oder enantiomere Verbindungen derselben, als Insektizid (Pyrethroid).

Nach einer besonders vorteilhaften Ausführungsform ist im erfindungsgemäßen Holzkonservierungmsittel das Pyrethroid, bezogen auf 100 Gew.-% eingesetztes Pyrethroid, ganz oder teilweise durch die gleiche Gewichtsmenge eines Insektizides auf der Basis von Organosiliciumverbingungen, vorzugsweise durch Dimethyl(phenyl)silylmethyl-3-phenoxybenzylether oder Dimethyl(phenyl)-silylmethyl-2-phenoxy-6-pyridylmethylether ersetzt ist.

Bevorzugt wird als Dimethyl(phenyl)silylmethyl-3-phenoxybenzylether Dimethyl(4-ethoxyphenyl)-silylmethyl-3-phenoxybenzylether der nachstehenden Formel

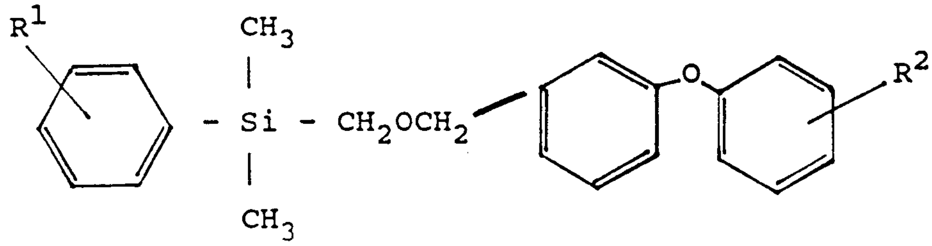

mit $R^1$ = 4-$OC_2H_5$ und $R^2$ = H
und als Dimethyl(phenyl)silylmethyl-2-phenoxy-6-pyridylmethylether Dimethyl(4-ethoxyphenyl)silylmethyl-2-phenoxy-6-pyridylmethylether der nachstehenden Formel

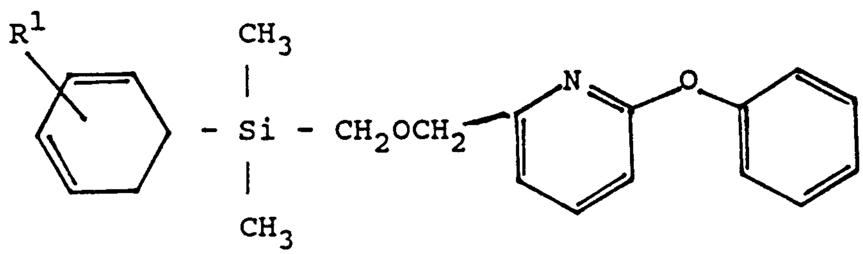

mit $R^1$ = 4-$OC_2H_5$
verwendet.

Aus der europäischen Patentanmeldung 0040106 ist die Verwendung von 3-Jod-2-propinylbutylcarbamat in wäßrigen Holzschutzmitteln bekannt. Eigene durchgeführte Versuche ergaben indessen, daß die Wirkstoffstabilität unbefriedigend ist, da Lösemittel sowie aromatische und aliphatische Kohlenwasserstoffe wie Glykole eine Abnahme der Wirkstoffstabilität in Gegenwart von Wasser bewirken. Überraschenderweise wird durch die erfindungsgemäße Mitverwendung von 2,2,4-Trimethyl-1,3-pentadiol-monoisobutyrat die Stabilität der erfindungsgemäßen Wirkstoffe bzw. Wirkstoffkombination in polaren oder unpolaren organisch-chemischen Lösemitteln oder Lösemittelgemischen verbessert sowie eine bessere Verteilung der Wirkstoffe bzw. Wirkstoffkombination im zu konservierenden Holz gewährleistet.

Das erfindungsgemäß verwendete Verdünnungsmittel besteht aus einem unpolaren oder polaren organischchemischen Lösemittel oder Lösemittelgemisch, vorzugsweise einem öligen oder ölartigen schwerflüchtigen organisch-chemischen Lösemittel oder Lösemittelgemisch. Als Beispiel für letzere Lösemittel sind zu nennen aromatische oder aliphatische Kohlenwasserstoffe sowie Gemische derselben oder Testbenzin.

Erfindungsgemäß wird als Bindemittel ein Alkydharz und/oder ein trockenes pflanzliches öl, vorzugweise jedoch ein Kunstharz auf der Basis eines Methylacrylat/n-Butylacrylat-Copolymerisats, eines Styrol/Acrylsäureester-Copolymerisats und/oder eines Polyvinylversatats eingesetzt.

Die Verwendung der in Wasser feindispergierten Kunstharze auf der Basis des Methylacrylat/n-Butylacrylat-Copolymerisats, des Styrol/Acrylsäureester-Copolymerisats oder des Polyvinylversatats mit einer durchschnittlichen Teilchengröße der Copolymere bzw. Polymere von unter 0,07 $\mu$m führt zu einer Verhinderung der Rückwanderung der bioziden Wirkstoffe aus dem Holz an die Holzoberfläche.

Als Emulgatoren werden Alkylarylsulfonate, Derivate der Alkylarylsulfonsäure und/oder Polyoxyethylenderivate und/oder Polyalkylen- oder Polyalkylglykoläther, vorzugsweise eine, eine oder mehrere Polyoxyethylengruppen und/oder ein oder mehrere Fettsäuregruppen enthaltenden oberflächenaktive organisch-chemischen Verbindung eingesetzt.

**Erfindungsgemäße Beispiele:**

**Beispiel 1:**

19,0 % Alkydharz (fest)
0,5 % Lösemittel (Gemisch von aromatischen Kohlenwasserstoffen)
3,1 % Emulgator (ethoxyliertes Nonylphenol)
2,0 % 2,2,4-Trimethyl-1,3-pentadiolmonoisobutyrat
0,8 % 3-Jod-2-propinyl-butylcarbamat
1,5 % Tebuconazol
0,05 % Permethrin 48 : 52
73,05 % Wasser
100 %

**Beispiel 2:**

19,0 % Alkydharz (fest)
0,5 % Lösemittel (Gemisch von aromatischen Kohlenwasserstoffen)
3,1 % Emulgator (ethoxyliertes Nonylphenol)
2,0 % 2,2,4-Trimethyl-1,3-pentadiolmonoisobutyrat
0,8 % Tebuconazol

0,5 % Methyl-benzimidazol-2-yl-carbamat
0,05 % Permethrin 48 : 52
74,05 % Wasser
100 %

**Beispiel 3:**

8,0 % Styrol/Acrylsäureester-Copolymerisat (fest)
1,6 % Lösemittel (Gemisch von aromatischen und aliphatischen Kohlenwasserstoffen)
3,0 % 2,2,4-Trimethyl-1,3-pentadiolmonoisobutyrat
1,5 % Tebuconazol
0,8 % 3-Jod-2-propinyl-butylcarbamat
0,05 % Permethrin 48 : 52
85,05 % Wasser
100 %

**Beispiel 4:**

4,0 % Methacrylat/n-Butylacrylat-Copolymerisat (fest) + Polyvinylversatat (fest)
1,6 % Lösemittel (Gemisch von aliphatischen Kohlenwasserstoffen)
3,0 % 2,2,4-Trimethyl-1,3-pentadiolmonoisobutyrat
0,8 % Tebuconazol
0,5 % Methyl-benzimidazol-2-yl-carbamat
0,05 % Permethrin 48 : 52
90,05 % Wasser
100 %

**Beispiel 5:**

19,0 % Alkydharz (fest)
0,5 % Lösemittel (Gemisch von aromatischen Kohlenwasserstoffen)
3,1 % Emulgator (ethoxyliertes Nonylphenol)
2,0 % 2,2,4-Trimethyl-1,3-pentadiolmonoisobutyrat
0,8 % 3-Jod-2-propinyl-butylcarbamat
1,5 % Tebuconazol
73,8 % Wasser
100 %

**Beispiel 6:**

19,0 % Alkydharz (fest)
0,5 % Lösemittel (Gemisch von aromatischen Kohlenwasserstoffen)
3,1 % Emulgator (ethoxyliertes Nonylphenol)
2,0 % 2,2,4-Trimethyl-1,3-pentadiolmonoisobutyrat
0,8 % Tebuconazol
0,5 % Methyl-benzimidazol-2-yl-carbamat
74,1 % Wasser
100 %

**Beispiel 7:**

8,0 % Styrol/Acrylsäureester-Copolymerisat (fest)
1,6 % Lösemittel (Gemisch von aromatischen und aliphatischen Kohlenwasserstoffen)
3,0 % 2,2,4-Trimethyl-1,3-pentadiolmonoisobutyrat
1,5 % Tebuconazol
0,8 % 3-Jod-2-propinyl-butylcarbamat
85,1 % Wasser
100 %

**Beispiel 8:**

4,0 % Methacrylat/n-Butylacrylat-Copolymerisat (fest) + Polyvinylversatat (fest)
1,6 % Lösemittel (Gemisch von aliphatischen Kohlenwasserstoffen)
3,0 % 2,2,4-Trimethyl-1,3-pentadiolmonoisobutyrat
1,0 % Tebuconazol
0,5 % Methyl-benzimidazol-2-yl-carbamat
89,9 % Wasser
100 %

**Nachweis der Wirksamkeit des erfindungsgemäßen Holzkonservierungsmittels gegenüber Bläuebefall**

| | |
|---|---|
| **Prüfmethode:** | Kurzprüfung von Schutzmitteln für Holz gegenüber Bläuepilzen |
| **Sporensuspension:** | Herstellung einer Sporensuspension gemäß EN 152, Teil 1, Anhang B |
| **Prüfpilze:** | Aureobasidium pullulans<br>Sclerophoma pityophyla |
| **Prüfbehälter:** | Kolleflaschen |
| **Prüfhölzer:** | Kiefernsplintholz, 3 - 8 Jahrringe/cm, glatt gehobelt; Abmessungen: 9,3 x 4,5 x 1,0 cm Die Brettchen erhalten in der Mitte quer zur Faserrichtung eine Sägekerbe von 3 mm Tiefe und Breite. |
| **Prüfverfahren:** | Je eine Brettchenhälfte wird mit der zu prüfenden Schutzmittelmenge gestrichen. Anschließend werden die Hölzer drei Wochen im Labor zur Trocknung gelagert.<br><br>Die Brettchen werden für den Pilzversuch einzeln in Kolleflaschen auf Rundfilter gelegt, die Flaschen mit Zellstoff verschlossen und sterilisiert. Anschließend wird unter möglichst sterilen Bedingungen die Sporensuspension auf die Filter gegeben. |

| | |
|---|---|
| **Prüfkriterium:** | Nach acht Wochen Prüfdauer wird getrennt nach "Prüf"- und "Kontrollhälften" das Ausmaß der Oberflächenverblauung und die Tiefe der bläuefreien Zone ermittelt, wobei<br>0 = kein Bläuewachstum bedeutet<br>1 = max. 10 % der Fläche verblaut<br>2 = max. 50 % der Fläche verblaut<br>3 = Oberfläche fast völlig verlaubt bzw. leichter Bewuchs erkennbar<br>4 = Oberfläche völlig verblaut |

Die Oberflächen sollten bläuefrei sein und die Wirkungstiefe im Minimum 1mm und im Mittelwert 1,5 mm betragen.

Die folgenden Zusammensetzungen haben alle nach einer zweiwöchigen Lichtbeanspruchung im Xenotestgerät bestanden:

Erfindungsgemäße Beispiele:

| | Oberflächenbläue | Wirkungstiefe in mm |
|---|---|---|
| Beispiel 1 | 0 | 1,5 - 3,0 |
| Beispiel 2 | 0 | 1,5 - 2,5 |
| Beispiel 3 | 0 | 2,0 - 3,0 |
| Beispiel 4 | 0 | 1,5 - 3,0 |
| Beispiel 5 | 0 | 1,5 - 3,0 |
| Beispiel 6 | 0 | 2,0 - 3,0 |
| Beispiel 7 | 0 | 1,5 - 3,0 |
| Beispiel 8 | 0 | 1,5 - 2,5 |

Nachweis der Wirksamkeit des erfindungsgemäßen Holzkonservierungsmittels gegenüber holzzerstörenden Insekten

| | |
|---|---|
| Nummer der europäischen Prüfnorm: | DIN EN 46 "Bestimmung der vorbeugenden Wirkung gegenüber Eilarven von Hylotrupes bajulus (Linnaeus). (Laboratoriumsverfahren)" |
| Zusammensetzung des erfindungsgemäßen Holzkonservieurngsmittels: | 0,05 % Permethrin 48:52<br>1,50 % Tebuconazol<br>19,00 % Alkydharz (fest)<br>0,80 % 3-Jod-2-propinylbutylcarbamat<br>2,0 % 2,2,4-Trimethyl-1,3-pentadiol-isobutyrat<br>3,0 % Emulgator<br>73,65 % Wasser |
| Verwendete Holzart: | Kiefer (pinus sylvestris L.) |
| Untersuchte Konzentration des Holzschutzmittels: | 100 % |
| Art und Zahl der Arbeitsgänge: | Pipettieren, 2 x |
| Lösungs- bzw. Schutzmittelaufnahme: | siehe Tabelle Seite 16 |

Trocknungsverfahren: gemäß DIN EN 46

Ergebnisse der Prüfung siehe Tabelle Seite 16

| Art der Probehölzer | untersuchte Konzentration | AUFNAHME | | WIEDERGEFUNDENE LARVEN | | | nicht wiedergefundene |
|---|---|---|---|---|---|---|---|
| | | Lösung je Probeholz | Schutzmittel je Probeholz | tot | | lebend | |
| | | | | nicht genagt | genagt | genagt | |
| | % | g | g/m$^2$ | Anzahl | Anzahl | Anzahl | Anzahl |
| behandelt | 100 | | 160 | 10 | 0 | 0 | 0 |
| | 100 | | 160 | 10 | 0 | 0 | 0 |
| | 100 | | 160 | 10 | 0 | 0 | 0 |
| unbehandelte Kontrolle | --- | | --- | 0 | 0 | 10 | 0 |
| | --- | | --- | 0 | 0 | 10 | 0 |
| Lösemittelkontrolle | --- | | --- | --- | --- | --- | --- |

**Patentansprüche**

1. Wässriges Mittel zum Konservieren von Holz und Holzwerkstoffen auf Basis von Fungiziden und gegebenenfalls mindestens einem Insektizid, und einem Gemisch, welches Wasser, ein chemisches Bindemittel oder Fixierungsmittel, sowie ggf. ein organisches Verdünnungsmittel und/oder einen Emulgator enthält, dadurch gekennzeichnet, daß das Mittel
   0,1 bis 2 Gew.-%

α-[2-(4-Chlorphenyl)ethyl]-α-(1,1-dimethylethyl)-1H-1,2,4-triazol-1-ethanol,
0,2 bis 2,3 Gew.-%
eines fungiziden Carbamats, nämlich
3-Jod-2-propinyl-butylcarbamat oder
Methyl-benzimidazol-2-yl-carbamat,
1,0 bis 5,0 Gew.-%
2,2,4-Trimethyl-1,3-pentadiol-monoisobutyrat,
und
mehr als 89 Gew.-%
eines Gemisches, bestehend aus Wasser und mindestens einem Bindemittel und/oder Fixierungsmittel und gegebenenfalls mindestens einem organischen Verdünnungsmittel sowie ggf. mindestens einem Emulgator und/oder Netzmittel
enthält.

2. Mittel nach Anspruch 1, dadurch gekennzeichnet, daß es
0,8 bis 1,5 Gew.-%
α-[2-(4-Chlorphenyl)ethyl]-α-(1,1-dimethylethyl)-1H-1,2,4-triazol-1-ethanol enthält.

3. Mittel nach einem der vorstehenden Ansprüche, dadurch gekennzeichnet, daß es
0,3 bis 1,2 Gew.-%
eines fungiziden Carbamats enthält.

4. Mittel nach einem der vorstehenden Ansprüche, dadurch gekennzeichnet, daß es
2,0 bis 3,0 Gew.-%
2,2,4-Trimethyl-1,3-pentadiol-monoisobutyrat enthält.

5. Mittel nach einem der vorstehenden Ansprüche, dadurch gekennzeichnet, daß es zusätzlich
0,002 bis 0,8 Gew.-%, vorzugsweise
0,03 bis 0,2 Gew.-%
Cyano-(4-fluoro-3-phenoxyphenyl)-methyl-3-(2,2-dichlorethenyl)-2,2-dimethylcyclopropancarboxylat, (±)-α-Cyano-3-phenoxy-benzyl-(±)-cis, trans-3-(2,2-dichlorvinyl)-2,2-dimethylcyclopropan-carboxylat, (S)-α-Cyano-3-phenoxybenzyl(1R,3R)-3(2,2-dibromvinyl)-2,2-dimethylcyclopropan-carboxylat oder 3-Phenoxybenzyl-(±)-cis-trans-3-(2,2-dichlorvinyl)-2,2-dimethylclyclopropan-carboxylat oder enatiomere Verbindungen derselben als Insektizid (Pyrethroid) enthält.

6. Mittel nach einem der vorstehenden Ansprüche, dadurch gekennzeichnet, daß das Pyrethroid (bezogen auf 100 Gew.-% eingesetztes Pyrethroid) ganz oder teilweise durch die gleiche Gewichtsmenge eines Insektizides auf der Basis von Organosiliciumverbindungen, vorzugsweise durch Dimethyl(phenyl)-silylmethyl-3-phenoxybenzylether oder Dimethyl(Phenyl)silylmethyl-2-phenoxy-6-pyridylmethylether ersetzt ist.

7. Mittel nach Anspruch 6, dadurch gekennzeichnet, daß als Dimethyl(phenyl)silylmethyl-3-phenoxybenzylether Dimethyl(4-ethoxyphenyl)silylmethyl-3-phenoxybenzylether und als Dimethyl(phenyl)silylmethyl-2-phenoxy-6-pyridylmethylether Dimethyl(4-ethoxyphenyl)-silylmethyl-2-phenoxy-6-pyridylmethylether verwendet wird.

8. Mittel nach einem der vorstehenden Ansprüche, dadurch gekennzeichnet, daß das Verdünnungsmittel ein unpolares oder polares organisch-chemisches Lösungsmittel oder Lösungsmittelgemisch, vorzugsweise mindestens ein öliges oder ölartigen schwerflüchtiges organisch-chemisches Lösungsmittel oder Lösungsmittelgemisch enthält oder daraus besteht.

9. Mittel nach einem der vorstehenden Ansprüche, dadurch gekennzeichnet, daß als Bindemittel mindestens ein Alkydharz und/oder ein trockenes pflanzliches Öl enthalten ist.

10. Mittel nach einem der vorstehenden Ansprüche, dadurch gekennzeichnet, daß als Bindemittel ein Kunstharz auf der Basis eines Methylacrylat/n-Butylacrylat-Copolymerisats, eines Styrol/Acrylsäureester-Copolymerisats und/oder eines Polyvinylversatats enthalten ist.

## Claims

1. Aqueous agent for preserving wood and wooden materials based on fungicides and possibly at least one insecticide, and a mixture, which contains water, a chemical binding agent or fixing agent, as well as possibly an organic diluting agent and/or an emulsifier, characterized in that the agent contains
0.1 to 2% by weight
α-[2-(4-chlorophenyl)ethyl]-α-(1,1-dimethylethyl)-1H-1,2,4-triazole-1-ethanol,
0.2 to 2.3% by weight
of a fungicidal carbamate, namely
3-iodide-2-propinyl-butylcarbamate or
methyl-benzimidazole-2-yl-carbamate,
1.0 to 5.0% by weight
2,2,4-trimethyl-1,3-pentadiole-monoisobutyrate,
and
more than 89% by weight
of a mixture, consisting of water and at least one binding agent and/or fixing agent and possibly at least one organic diluting agent as well as possibly at least one emulsifier and/or wetting agent.

2. Agent according to Claim 1, characterized in that it contains
0.8 to 1.5% by weight
α-[2-(4-chlorophenyl)ethyl]-α-(1,1-dimethylethyl)-1H-1,2,4-triazole-1-ethanol.

3. Agent according to one of the preceding claims, characterized in that it contains
0.3 to 1.2% by weight
of a fungicidal carbamate.

4. Agent according to one of the preceding claims, characterized in that it contains
2.0 to 3.0% by weight
2,2,4-trimethyl-1,3-pentadiol-monoisobutyrate.

5. Agent according to one of the preceding claims, characterized in that additionally it contains
0.002 to 0.8% by weight, preferably
0.03 to 0.2% by weight
cyano-(4-fluoro-3-phenoxyphenyl)-methyl-3-(2,2-dichloroethenyl)-2,2-dimethylcyclopropancarboxylate,-(±)α-cyano-3-phenoxy-benzyl-(±)-cis, trans-3-(2,2-dichlorovinyl)-2,2-dimethylcyclopropancarboxylate, (S)-α-cyano-3-phenoxybenzyl(1R,3R)-3(2,2-dibromovinyl)-2,2 -dimethylcyclopropancarboxylate or 3-phenoxybenzyl-(±)-cis-trans-3-(2,2-dichlorovinyl)-2,2-dimethylcyclopropancarboxylate or enatiomeric compounds thereof as an insecticide (pyrethroid).

6. Agent according to one of the preceding claims, characterized in that the pyrethroid (pyrethroid used with respect to 100% by weight) is replaced completely or partially by the same weight of an insecticide based on organo-silicon compounds, preferably by dimethyl(phenyl)silylmethyl-3-phenoxybenzylether or dimethyl(phenyl)silylmethyl-2-phenoxy-6-pyridylmethylether.

7. Agent according to Claim 6, characterized in that as the dimethyl(phenyl)silylmethyl-3-phenoxybenzylether, dimethyl(4-ethoxyphenyl)silylmethyl-3-phenoxybenzylether is used and as the dimethyl-(phenyl)silylmethyl-2-phenoxy-6-pyridylmethylether, dimethyl(4-ethoxyphenyl)-silylmethyl-2-phenoxy-6-pyridylmethylether is used.

8. Agent according to one of the preceding claims, characterized in that the diluting agent contains a non-polar or polar organic chemical solvent or solvent mixture, preferably at least one oily or oleaginous difficultly volatile organic chemical solvent or solvent mixture or consists thereof.

9. Agent according to one of the preceding claims, characterized in that contained as the binding agent is at least one alkyd resin and/or dry vegetable oil.

10. Agent according to one of the preceding claims, characterized in that contained as the binding agent is a synthetic resin based on methylacrylate/n-butylacrylate-copolymerisate, a styrene/acrylic acid ester-copolymerisate and/or a polyvinylversatate.

## Revendications

1. Agent aqueux pour la conservation du bois et des matériaux en bois, à base de fongicides et éventuellement d'au moins un insecticide, et d'un mélange contenant de l'eau, un liant chimique ou un agent chimique de fixation, ainsi qu'éventuellement un diluant organique et/ou un émulsifiant, caractérisé en ce qu'il contient
   0,1 à 2 % en poids
   d'α-[2-(4-chlorophényl)éthyl]-α-(1,1-diméthyléthyl)-1H-1,2,4-triazol-1-éthanol,
   0,2 à 2,3 % en poids
   d'un carbamate fongicide, à savoir le butylcarbamate de 3-iodo-2-propynyle ou le méthyl-carbamate de benzimidazol-2-yle,
   1,0 à 5,0 % en poids
   de monoisobutyrate de 2,2,4-triméthyl-1,3-pentanediol et
   plus de 89 % en poids d'un mélange
   consistant en eau et en au moins un liant et/ou un agent de fixation et éventuellement au moins un diluant organique ainsi qu'éventuellement au moins un émulsifiant et/ou un mouillant.

2. Agent selon la revendication 1, caractérisé en ce qu'il contient
   0,8 à 1,5 % en poids
   d'α-[2-(4-chlorophényl)éthyl]-α-(1,1-diméthyléthyl)-1H-1,2,4-triazol-1-éthanol.

3. Agent selon une des revendications précédentes, caractérisé en ce qu'il contient
   0,3 à 1,2 % en poids
   d'un carbamate fongicide.

4. Agent selon l'une des revendications précédentes, caractérisé en ce qu'il contient
   2,0 à 3,0 % en poids
   de monoisobutyrate de 2,2,4-triméthyl-1,3-pentanediol.

5. Agent selon une des revendications précédentes, caractérisé en ce qu'il contient en outre
   0,002 à 0,8 % en poids, avantageusement
   0,03 à 0,2 % en poids
   de 3-(2,2-dichloroéthényl)-2,2-diméthylcyclopropane carboxylate de cyano-(4-fluoro-3-phénoxphényl)-méthyle, de (±)-cis-trans-3-(2,2-dichlorovinyl)-2,2-diméthylcyclopropane carboxylate de (±) α-cyano-3-phénoxybenzyle, de (1R,3R)-3(2,2-dibromovinyl)-2,2-diméthylcyclopropane carboxylate de (S)-α-cyano-3-phénoxybenzyle ou de (±)-cis-trans-3-(2,2-dichlorovinyl)-2,2-diméthylcyclopropane carboxylate de 3-phénoxybenzyle ou de leurs composés énantiomères, comme insecticide (Pyréthroïde).

6. Agent selon une des revendications précédentes, caractérisé en ce que le Pyrétroïde (calculé pour 100 % en poids du Pyrétroïde utilisé) est remplacé entièrement ou partiellement par la même quantité pondérale d'un insecticide à base de composés organiques du silicium, avantageusement par de l'éther de diméthyl(phényl) silylméthyle et de 3-phénoxybenzyle ou d'éther de diméthyl(phényl)-silylméthyle et de 2-phénoxy-6-pyrididylméthyle.

7. Agent selon la revendication 6, caractérisé en ce qu'on utilise comme éther de diméthyl(phényl)-silylméthyle et de 3-phénoxybenzyle l'éther de diméthyl(4-éthoxyphényl)silylméthyle et de 3-phénoxybenzyle et, comme éther de diméthyl(phényl) silylméthyle et de 2-phénoxy-6-pyridylméthyle, l'éther de diméthyl(4-éthoxyphényl)silylméthyle et de 2-phénoxy-6-pyridylméthyle.

8. Agent selon l'une des revendications précédentes, caractérisé en ce que le diluant contient, ou est constitué par, un solvant organique chimique non polaire ou polaire ou un mélange de tels solvants, avantageusement au moins un solvant organique chimique huileux ou du genre huileux, peu volatil, ou un mélange de tels solvants.

9. Agent selon l'une des revendications précédentes, caractérisé en ce qu'il contient comme liant au moins une résine alkyde et/ou une huile végétale sèche.

**10.** Agent selon l'une des revendications précédentes, caractérisé en ce qu'il contient comme liant une résine synthétique à base d'un copolymère d'acrylate de méthyle/acrylate de n-butyle, d'un copolymère de styrène/ester d'acide acrylique et/ou d'un versatate de polyvinyle.